# EUROPEAN PATENT SPECIFICATION

(11) **EP 1 205 102 B1**
(45) Date of publication and mention of the grant of the patent: **16.01.2008**
(21) Application number: 01309452.9
(22) Date of filing: 08.11.2001
(51) Int. Cl.: A01F 15/08, A01F 15/07

(54) **Combined baler/bale wrapper apparatus**
Kombinierte Ballenpresse/Ballenwickelgerät
Appareil combiné pour le pressage et l'emballage de balles

(30) Priority: 08.11.2000 GB 0027321; 21.11.2000 GB 0028281
(43) Date of publication of application: 15.05.2002
(73) Proprietor: Kverneland Naerbo AS, 4350 Naerbo (NO)
(72) Inventor: Royneberg, Erling, 4350 Naerbo (NO)
(74) Representative: Raynor, Simon Mark

(56) References cited:
- WO-A-00/36903
- DE-A- 3 805 224
- DE-U- 29 912 884
- FR-A- 2 783 131
- US-A- 5 802 805
- US-A- 6 012 271

## Description

This invention relates to a combined baler and bale wrapper apparatus for use in (a) picking-up an agricultural crop material lying on the ground, (b) forming the material into a tightly packed bale, (c) applying stretchable plastics film wrapping to the bale to form a substantially sealed enclosure of the bale, and (d) discharging the wrapped bale.

It is well known to use balers to form tightly packed bales e.g. of grass, hay or straw, and such balers can be of a type which (1) forms bales of rectangular cross section and (2) forms cylindrical bales of circular cross section (so-called "round" bales or "big bales").

Balers which form cylindrical bales are usually of the "fixed chamber" or "variable chamber" type, both of which will be well known to those of ordinary skill in the art and which therefore need not be described in more detail herein.

Bale wrappers are also well known, and are usually supplied with bales to be wrapped, in which the bales have been formed in a separate baling apparatus, and then deposited on the ground for subsequent pick-up and wrapping by a mobile bale wrapper. Alternatively, when a static bale wrapper is provided, it is supplied with bales by a forklift or other bale handling device.

Bale wrappers are (a) of the rotating turntable type, in which a bale is rotated simultaneously about its longitudinal axis (usually generally horizontal) and about an upright axis (usually generally vertical), while film is withdrawn from a static film dispenser reel in order to wrap the bale; or (b) of the "satellite" film dispenser reel type, in which the bale is rotated about its longitudinal axis while one or more film dispenser reel carries out orbital movement around the bale in a substantially horizontal plane while film is withdrawn to apply stretched film wrapping around the bale.

It is known from our published International application WO00/36903 to provide a combined baling and wrapping apparatus which comprises a frame, a wheel-set supporting the frame, upper and lower bale-forming means mounted on the frame and defining a bale-forming chamber, a pick-up device mounted on the frame and operative to pick-up crop material lying on the ground and to feed such material to the bale-forming chamber, and a housing adjustably mounted on the frame for movement between a bale-forming position and an inoperative position and with the upper bale-forming means being mounted on the housing for movement therewith. This portion of the apparatus comprises the bale-forming components, and what will be described below are the bale wrapping components of the combined or integrated apparatus.

Thus, the bale wrapping components comprise a film reel carrier mounted on the frame to rotate around the bale, and such carrier extending at least partly around the bale when see in plan view; a guide mounted on the frame and defining an orbital path of movement for the carrier around the bale; and at least one holder for a film dispenser reel mounted on the carrier and rotatable around the bale during rotation of the carrier so that, when a bale has been formed in the chamber and the housing has been moved to the inoperative position, a dispenser reel when mounted on the carrier can apply stretch film wrapping to the bale simultaneously with rotation of the bale by the lower bale-forming means of the bale-forming chamber.

The present invention is concerned with an improvement to the general type of combined or "integrated" baler and wrapping apparatus disclosed in WO00/36903, and in particular to improve the means by which input power is routed to the operating components of the apparatus, namely the bale-forming components and the bale-wrapping components.

There are two main stages of operation, namely the formation of the bale in the chamber, and the subsequent wrapping of the bale with stretch-film wrapping. In the formation of the bale, the bale-forming rollers which surround the chamber are driven, and substantial power consumption is required to drive the rollers.

In the known arrangement, the rollers are arranged in two groups, namely a lower group of rollers which subtend an angle of about 90° at the centre of the chamber, and an upper group of rollers which subtend an angle of about 270° at the centre of the chamber, and which are mounted internally of the housing, which takes the form of a liftable hood or cover. After completion of formation of the bale, the hood is lifted so that the upper group of rollers does not interfere with the operation of the bale-wrapping components.

However, in the subsequent wrapping stage, there is a smaller power demand, and furthermore it is only the lower group of rollers which is driven in order to rotate the bale about its axis while wrapping takes place. In addition, while the lower group of rollers is being driven during the wrapping stage, input power is required also to operate a film-wrapping device. The present invention utilises a satellite type of film wrapping arrangement, in which at least one film dispenser reel is caused to "orbit" around the bale while the latter is rotated about its axis by the lower group of rollers (associated with the bale-forming chamber).

Given that there is a high demand for mechanical power to operate the apparatus in the baling mode, and there is a lower demand for power to operate the apparatus in the wrapping mode, (and bearing in mind also that the vehicle propelling the apparatus, usually an agricultural tractor, is the sole source of power), it is a desirable requirement to provide two separate drive trains, one to operate the bale-forming components and the other to operate the wrapping components. The invention provides a technical solution to this requirement, despite the difficulty that the lower group of rollers are required to assist in both the baling operation, and also the wrapping operation.

According to one aspect of the invention there is provided a combined baler and bale wrapper apparatus as defined in claim 1.

Therefore, apparatus according to the invention can operate in the bale-forming mode, by providing rotary mechanical power to operate both the upper and lower group of rollers, such power being derived from the input drive line and the mechanical drive train. When adjusted to operate in the bale-forming mode, the first and second motors are inoperative. However, when the apparatus is adjusted to operate in the bale-wrapping mode, power supply to the input drive line (e.g. from a propelling vehicle) is switched off, or otherwise rendered ineffective, and the first and second motors are then driven, with the first motor applying rotary input power to the lower group of rollers only, and the second motor providing power to move the holder for the film reel along the closed path around the bale.

The first coupling is arranged in the mechanical drive train and is operative to transmit rotary mechanical power to the lower group of rollers, when the apparatus is operating in the bale-forming mode, but is capable of uncoupling itself from the mechanical drive train when the apparatus is operating in the bale-wrapping mode (when the first motor transmits rotary mechanical power to the lower group of rollers via a part of the mechanical drive train).

The second coupling is operative to transmit rotary power from the first motor and via part of the mechanical drive train to the lower group of rollers when the apparatus is operating in the bale-wrapping mode, but is capable of uncoupling itself from the mechanical drive train when the apparatus is operating in the bale-forming mode.

According to a second aspect of the invention there is provided a combined baler and wrapper apparatus as defined in claim 2.

According to a third aspect of the invention there is provided a combined baler and wrapper apparatus as defined in claim 3.

According to a fourth aspect of the invention there is provided a combined baler and bale wrapper apparatus as defined in claim 4.

Preferably, the first and second motors are hydraulic motors, and provided with pressure fluid to operate them via pressure lines e.g. lines coupled with the propelling vehicle. The motors are preferably operable in synchronism, whereby the first motor drives the lower group of rollers in order to rotate the bale, and the second motor moves the holder for the film reel along the closed path, in synchronism with the rotation of the bale by the lower group of rollers (when the apparatus is operating in its bale-wrapping mode).

The holder for the film dispenser reel may be arranged to move along a required closed path by any convenient mechanical arrangement. In one preferred arrangement, the holder takes the form of a ring, or part ring, which is driven to rotate about its axis via the second motor, and with the closed path passing close to the ends of the bale, thereby minimising the length of film wrapping extending between the film reel and the bale which it is covering, thereby minimising the risk of any wind action having a "ballooning" effect on the length of film stretched between the reel and the bale.

As an alternative, the holder may comprise a film reel mounting depending from a rotating satellite arm type of arrangement.

During operation, the first and second couplings are arranged in the mechanical drive train, but one of the couplings is operative when input power is being supplied to the input drive line, whereas the other coupling is then inoperative. Conversely, when power to the input drive line is switched off, and the first and second motors are being utilised to drive the apparatus when operating in its bale wrapping mode, the other coupling is operative to transmit power to part of the mechanical drive line from the first motor, whereas the first mentioned coupling is now inoperative.

The first and second couplings comprise simple free wheel devices, which apply drive when in their operative modes, but which "free wheel" when they are inoperative.

Any suitable mechanical drive train to operate the upper group of rollers may be provided, and which may comprise a belt or chain drive taken from an output shaft forming part of the mechanical drive train, such shaft providing power to operate the lower group of rollers, and the belt or chain drive providing rotary power to operate the upper group of rollers.

By means of the invention, it is possible to reduce the overall time for completion of a bale-forming, and bale wrapping cycle, compared with existing machines. The reasons why this is possible may be one or more of the following:
1. The film reel is able to travel close to the bale, during wrapping, so as to minimise "wind ballooning" effect, and therefore the film reel can travel i.e. orbit around the bale faster than with existing machines.
2. No handling of the bale is necessary, after completion of the bale-forming step, and with bale wrapping taking place in situ i.e. while the bale is still in the bale forming chamber, it is no longer necessary to employ standard practice of applying netting many times around the bale, (which is usually about two and a half wrappings), to give sufficient cohesion to apply the bale to be dumped onto the ground. However, with the bale remaining in the chamber while wrapping takes place, it can be sufficient for only one and a half net wrappings to be applied, before wrapping starts.

With an embodiment of the invention, it has been found possible to form and wrap bales at a rate of about 45 per hour maximum. In a typical arrangement, of possibly 36 per hour, about 60 seconds may be required to fill the chamber and make the bale; and 40 seconds to apply one and a half wrappings of net around the bale, and to apply 6 layers of film.

After completion of the bale wrapping stage, and with the carrier / the housing in the inoperative position, then the wrapped bale can be discharged rearwardly. Conveniently, the rearward discharge is achieved by a roller unit of the lower group of rollers, which pivots downwardly and allows easy gravity discharge of the wrapped bale onto the ground. To facilitate the release of the wrapped bale, it is preferred that at least the lower roller of the upper group of rollers, located above the downwardly pivotable roller unit of the lower group of rollers, is movable generally radially outwardly, and which assists release of the wrapped bale and upward movement of the hood.

Upon completion of discharge of the wrapped bale, the hood is then lowered again, and preferably a spring-loaded hook arrangement is provided, to latch the hood in the lowered position, ready for a further cycle of operation to be started.

The apparatus is preferably provided with a forward crop pick-up device, which may be of any known constructions, and picks-up the crop e.g. mown grass, and then delivers it rearwardly into the bale-forming chamber, where the action of the rollers of the upper and lower groups then form the bale.

Preferably, the bale-forming components are of the type usually provided in a fixed chamber baler.

In a preferred embodiment, the first and second couplings are mechanical free-wheel couplings. However, other arrangements are possible, and including providing first and second couplings which are hydraulic arrangements having an operative mode when the apparatus is in its bale-wrapping mode, and an inoperative mode when the apparatus is in its bale-forming mode.

A preferred embodiment of combined baler / bale wrapper apparatus according to the invention will now be described in detail, by way of example only, with reference to the accompanying drawings, in which:
Figure 1 is a side view of the apparatus, showing the apparatus adjusted to a bale-forming mode, in which it is operative to pick-up an agricultural crop lying on the ground, to transfer the crop to a bale-forming chamber, and to form a bale therein;
Figure 2 is a plan view of the apparatus, corresponding to Figure 1;
Figure 3 is a side view, similar to Figure 1, but showing the apparatus adjusted to operate in a bale-wrapping mode, in which a housing mounting an upper group of bale-forming rollers is upwardly displaced to an inoperative position so that bale wrapping can take place;
Figure 4 is a plan view corresponding to Figure 3; and,
Figure 5 is a schematic illustration of a mechanical drive train and a hydraulically operated drive train, utilised to operate the bale-forming components, and the bale-wrapping components of the apparatus.

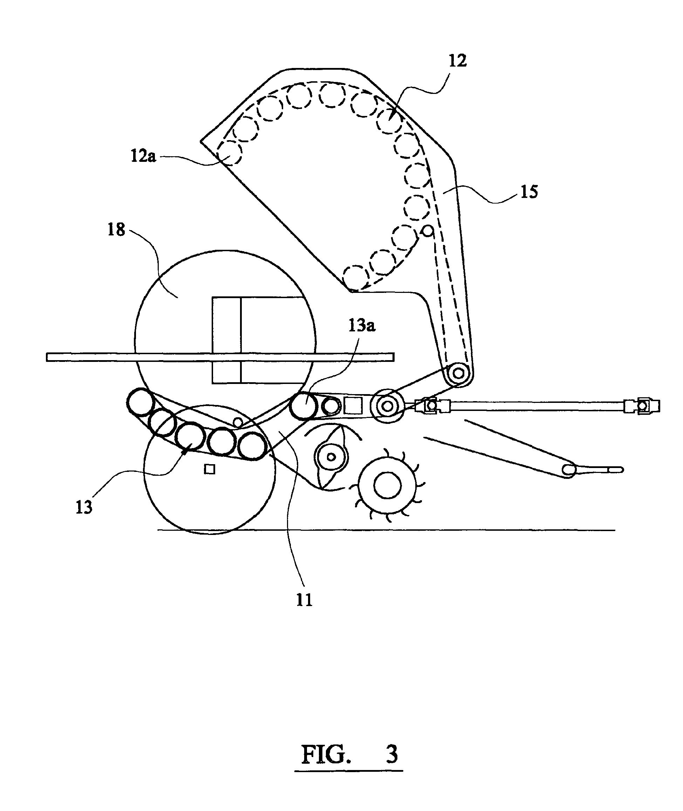

Referring now to the drawings, a preferred embodiment of the invention will now be described in detail, and which is a combined baler and bale wrapper apparatus designated generally by reference 10, and which comprises a wheel-supported frame 11, and an upper group of rollers 12 and a lower group of rollers 13 (see Figure 3) mounted on the frame 11, and defining a bale-forming chamber 14 in which a bale can be formed. In the illustrated embodiment, the bale-forming components of the apparatus 10 are of the "fixed chamber" type, though it should be understood that it is within the scope of this invention to utilise a "variable chamber" type of baling apparatus.

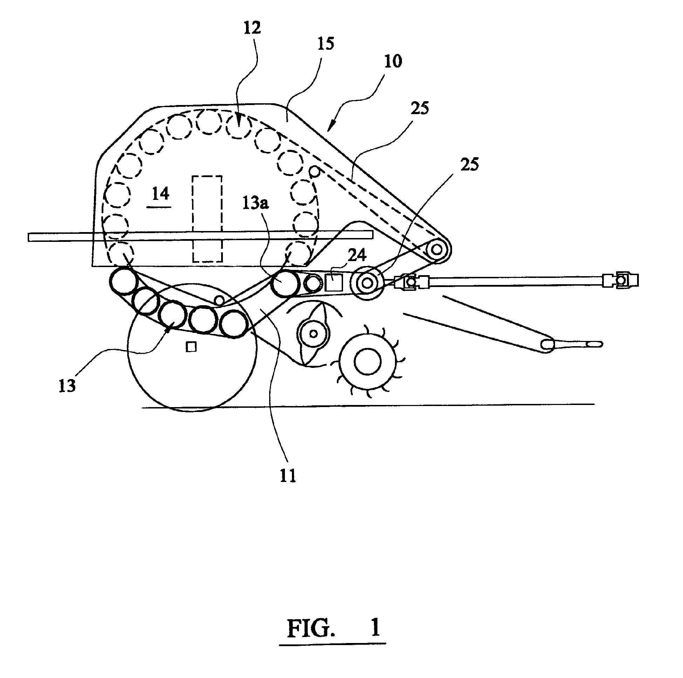

A roller carrier 15 is adjustably mounted on the frame 11 for movement between a bale-forming position shown in Figure 1, and an inoperative position shown in Figure 3. In the illustrated embodiment, carrier 15 takes the form of a hood or cover, though it may comprise a support frame on which the upper group of rollers 12 is mounted, in which case a separate openable cover, hood or lid may be provided, overlying the support frame. The upper group of rollers 12 is therefore mounted on the carrier 15 for movement therewith.

A holder 16 is provided, on which one or more film dispenser reel 17 is mounted, and the holder 16 is capable of carrying out a closed path of movement around a bale 18 (see Figure 3) after formation in the chamber 14, and movement of the housing 15 to the inoperative position. The film dispenser reel 17 is able to apply stretch film wrapping to the bale 18 simultaneously with rotation of the bale by the lower group of rollers 13.

The holder 16 takes the form of a ring shaped support, which carries out a circular orbital path of movement around the bale 18, and rotation of the support 16 is obtained by driven engagement of the teeth of a pinion driven by a motor 28 which engages a toothed rack (not shown) provided on the outer periphery of the support 16.

An input drive line 20 is mounted on the frame 11 of the apparatus, and preferably receives input power via its input end 21 from the power take-off shaft of the tractor or other vehicle being used to propel the apparatus. Alternatively, the drive line 20 may receive input power from a power pack provided on the frame of the apparatus. Input drive line 20 therefore is able to provide rotary mechanical power to operate the bale-forming components of the apparatus, as will be described in more detail below.

A mechanical drive train, designated generally by reference 22 is coupled with the input drive line 20 and is arranged to provide rotary input power to operate the upper group of rollers 12 and the lower group 13 of rollers, when the apparatus is operating in the bale-forming mode. The mechanical drive train includes a transversely extending drive shaft 23 coupled with a gear box 24 driven by input drive line 20, and the upper group of rollers 12 is driven by an off-set chain drive 25 (or endless belt) driven by the shaft 23, whereas the lower group of rollers 13 is driven by a drive train designated generally by reference 26, also driven by the shaft 23, and comprising input drive to a leading roller 13a of the lower group of rollers 13, and which are all driven jointly by an endless belt or chain drive.

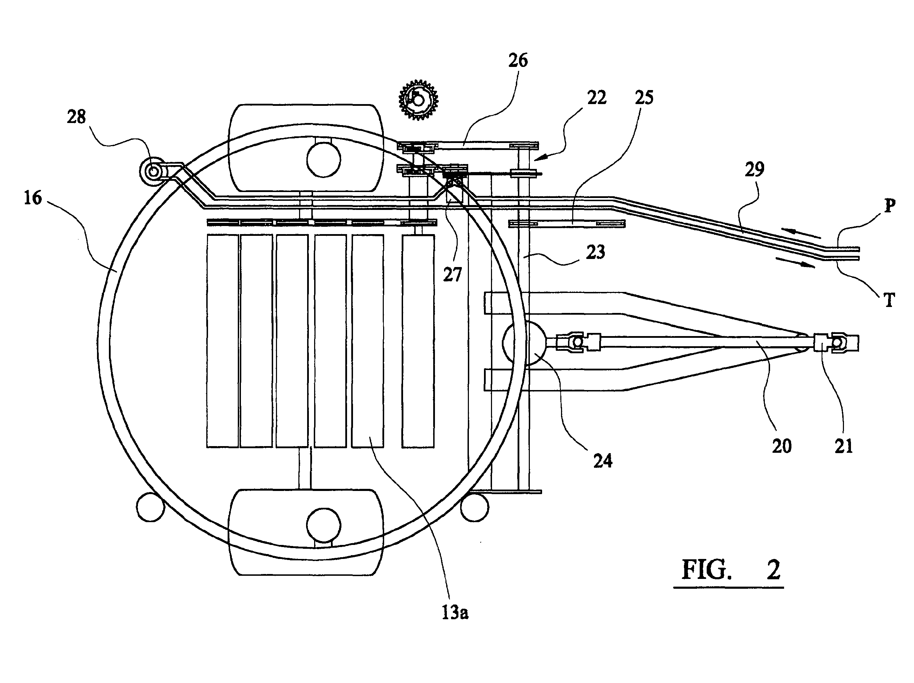

When the apparatus is operating in a bale-forming mode, as shown in Figures 1 and 2, the rollers of the upper and lower groups 12 and 13 are driven, so as to form a progressively increasing bale within the chamber 14, these rollers all receiving power input ultimately from the input drive line 20. However, when it is required to adjust the apparatus to operate in a bale wrapping mode, an alternative routing of power is provided, as will be described below.

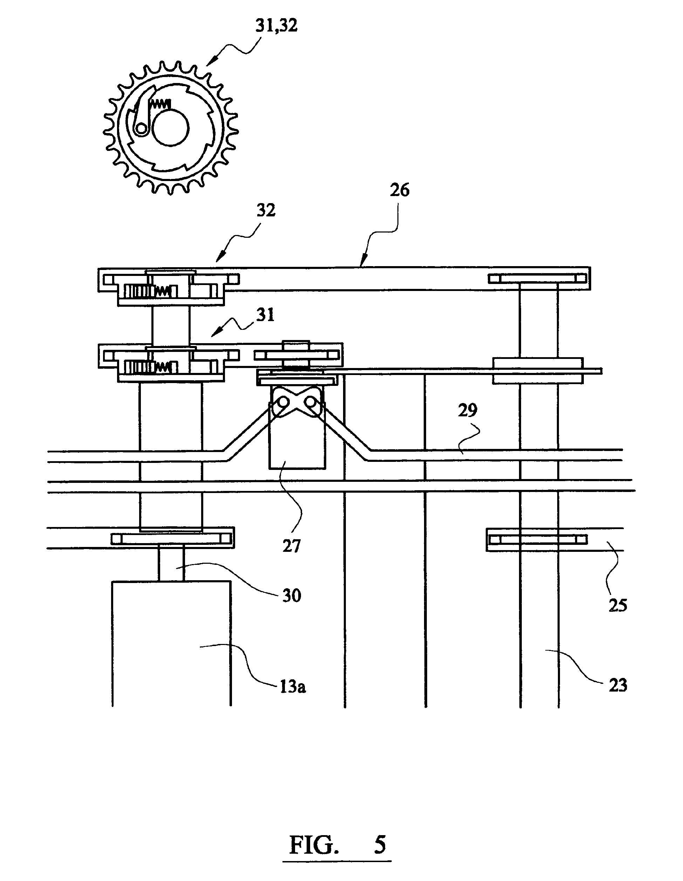

The alternative routing of power comprises first and second motors 27 and 28, and which are preferably hydraulic motors arranged to operate in synchronism. When bale 18 has been formed, input power from the drive line 20 is switched off, or interrupted, and motors 27 and 28 provide rotary input power, respectively, to the lower group of rollers 13, and to the holder 16 for the film dispenser reel(s) 17. Thus, first motor 27 provides rotary input power to operate the lower group of rollers 13, and via a part of the same mechanical drive train (26) to the group of rollers as is used to transmit power derived from the input power line 20. Figure 5 is a schematic and enlarged view illustrating the routing of power to operate the bale-forming and bale-wrapping components of the apparatus.

Motor 27 receives pressurised fluid via supply line 29 which is connected to a source of pressurised fluid e.g. on the propelling vehicle, and transmits rotary power to drive shaft 30 leading to the leading roller 13a of the lower group 13, via a coupling 31. Coupling 31 therefore is able to transmit rotary power from the first motor 27 and via part of the mechanical drive train to the lower group of rollers, when the apparatus is operating in the bale-wrapping mode. However, coupling 31 is capable of uncoupling itself from the mechanical drive train when the apparatus is operating in the bale-forming mode i.e. when mechanical power is transmitted via the mechanical drive train 26 from the input drive line 20. The coupling 31 takes the form of a free wheel device, which can be a ratchet type device, as shown on Figure 5.

A further coupling 32 is arranged in the mechanical drive train 26, and this also preferably is a free wheel device, and which is able to transmit rotary mechanical power to the lower group of rollers 13, when the apparatus is operating in the bale-forming mode, and is receiving input power from the input drive line 20 (when the coupling 31 will be effectively disabled). However, coupling 32 also will be uncoupled from the mechanical drive train i.e. free wheeling, when the apparatus is operating in the bale-wrapping mode, and driven by first motor 27 (which drives the lower group of rollers), and second motor 28 which causes the film dispenser reels to orbit around a closed path around the bale.

As an alternative to the mechanical freewheel couplings 31 and 32 as shown, other types of coupling may be used, having an operational capability when the motors 27 and 28 are required to provide the only source of input power to operate the apparatus in the bale-wrapping mode. The couplings may comprise hydraulically operative arrangements which provide drive power from the motors when required, but which run idly e.g. dump pressurised fluid when inoperative.

Thus, in the case of hydraulic arrangements serving to provide the function of the mechanical freewheel couplings, they will have an operative mode when the apparatus is in its bale-wrapping mode, and an inoperative mode when the apparatus is in its bale-forming mode.

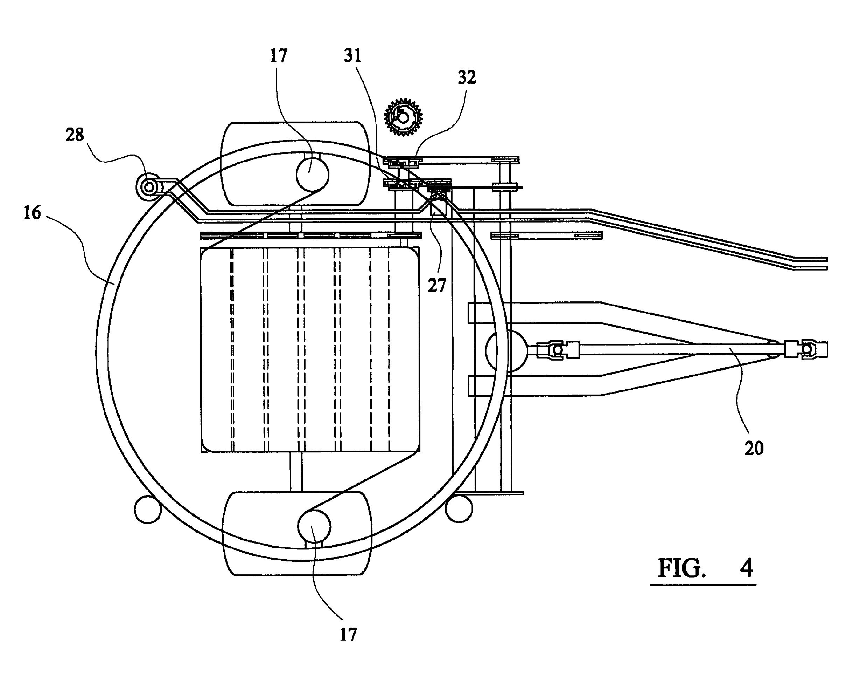

It will be noted particularly from Figure 4 that the film dispenser reels 17 move along a closed path which is close to the outer periphery of the bale 17, and this minimises any "wind ballooning" effect which may be applied to the length of film extending between the reel and the bale. This allows increased speed of the support 16, such that the overall time of an operating cycle i.e. bale forming, wrapping and discharge, can be significantly reduced compared with existing machines.

Upon completion of the formation of a wrapped bale, and with the carrier / enclosure 15 in the raised position shown in Figure 3, a three roller unit of the lower group of rollers 13, namely the set of three rearmost rollers, can be pivoted downwardly so as to allow the wrapped bale to be discharged under gravity onto the ground, or onto a collecting device.

To facilitate release of the bale 18, when the housing or hood 15 moves upwardly to the inoperative position, it is preferred that at least one of the rollers 12a can be moved radially outwardly, thereby enlarging the space between roller 12a and the oppositely facing roller of the upper group of rollers 12, to allow the bale to be released.

After discharge of the wrapped bale, the housing or hood 15 is moved downwardly to take-up the bale-wrapping position again, shown in Figure 1, and preferably a spring-loaded hook arrangement (not shown) is provided, to retain the hood in the lowered bale-forming position.

In Figure 2, there is shown a single motor 28 which is supplied with pressurised fluid and engages drivingly with the ring-shaped holder 16, in order to cause the film dispenser reel(s) 17 to orbit around the rotating bale during the wrapping stage. However, it should be understood that more than one drive motor 28 may be provided, to apply rotation to the holder 16, and preferably they will be arranged diametrically opposed to each other.

The described embodiment of the invention is a towed vehicle, but it should be understood that the claimed features of the invention may be applied to a self-propelled apparatus also.

Furthermore, by providing the couplings 31, 32, it is possible, if required, to maintain rotation of the upper group of rollers 12 as the carrier / housing 15 moves to its inoperative position, and this gives a considerable advantage to the handling of the bale. Thus, continued rotation of the rollers 12 facilitates release of the upper part of the bale from the upper rollers 12 as the carrier / housing 15 moves to its inoperative position. The operation is preferably such that the rollers 12 stop rotation after the carrier / housing 15 has reached its inoperative position, and the bale-wrapping stage has started.

Therefore, in general terms, the operation can be modified whereby the rollers 12 continue to rotate, at least during the initial stage of movement of the carrier 15 from the bale-forming position and towards the inoperative position, such as to facilitate separation of the formed bale from the upper group of rollers 12 and prior to commencement of the bale-wrapping stage.

## Claims

1. A combined baler and bale wrapper apparatus (10) which comprises:
a frame (11);
an upper group of rollers (12) and a lower group of rollers (13) mounted on the frame (11) and defining a bale-forming chamber (14) in which a bale (18) can be formed;
a roller carrier (15) adjustably mounted on the frame (11) for movement between a bale-forming position and an inoperative position, said upper group of rollers (12) being mounted on the carrier (15) for movement therewith;
a holder (16) for a film dispenser reel (17) which is mounted on the frame (11) so as to be capable of carrying out a closed path of movement around the bale (18) so that, when the bale (18) has been formed in the chamber (14) and the carrier (15) has been moved to the inoperative position, a dispenser reel (17) when mounted on the holder (16) can apply stretch film wrapping to the bale (18) simultaneously with rotation of the bale (18) by the lower group of rollers (13);
an input drive line (20); and
a mechanical drive train (25, 26) coupled with the input drive line (20) and arranged to provide rotary input power to operate the upper and lower groups of rollers (12, 13) when the apparatus is operating in a bale-forming mode;
**characterised by:**
first and second motors (27, 28) operable to apply rotary input power respectively to the lower group of rollers (13) and to the holder (16) for the film reel (17) when the apparatus is operating in a bale-wrapping mode, and also when power from the input drive line (20) is switched off;
a first coupling (32) arranged in the mechanical drive train (26) and operative to transmit rotary mechanical power to the lower group of rollers (13), when the apparatus is operating in the bale-forming mode, but being inoperative when the apparatus is operating in the bale-wrapping mode; and,
a second coupling (31) operative to transmit rotary power from the first motor (27) and via part of the mechanical drive train (26) to the lower group of rollers (13) when the apparatus is operating in the bale-wrapping mode, but inoperative when the apparatus is operating in the bale-forming mode.

2. Apparatus according to claim 1, **characterised in that** the first coupling (32) is operative to transmit rotary mechanical power only to the lower group of rollers (13), but being inoperative when the apparatus is operating in the bale-wrapping mode.

3. Apparatus according to claim 1, **characterised in that** at least one of the couplings (32, 31) is a freewheel coupling.

4. Apparatus according to claim 1, **characterised in that** the first coupling is operative at least when the apparatus is operating in the bale-forming mode, but being inoperative when the apparatus is operating in the bale-wrapping mode; and **in that** drive to the upper group of rollers (12) continues at least during the initial stage of movement of the carrier (15) from the bale-forming position and towards the inoperative position, in order to facilitate separation of the formed bale from the upper group of rollers (12) prior to commencement of the bale-wrapping mode.

5. Apparatus according to claim 4, in which the continued drive to the upper group of rollers (12) is derived from input power supply to the input drive line (20).

6. Apparatus according to any one of claims 1 to 5, in which the first and second motors (27, 28) are hydraulic motors.

7. Apparatus according to claim 6, in which the first and second motors (27, 28) are operable in synchronism.

8. Apparatus according to any one of claims 1 to 7, in which the holder (16) comprises a circular, or part circular support which is driven to rotate about its axis via the second motor (28).

9. Apparatus according to claim 8, in which the second motor (28) has a pinion engaging with a toothed ring provided on the support (16).

10. Apparatus according to any one of claims 1 to 9, in which the holder for the film dispenser reel (17) is an orbiting satellite type of arrangement.

11. Apparatus according to any one of the preceding claims, in which more than one motor (28) is provided to drive the holder (16) to rotate about its axis, during the operation of the apparatus in the bale-wrapping mode.

12. Apparatus according to any one of the preceding claims, in which the lower group of rollers (13) includes a roller unit which is downwardly displacable, when wrapping of the bale (18) has been completed, to allow discharge of the wrapped bale.

13. Apparatus according to any one of the preceding claims, in which the upper group of rollers (12) includes a roller (12a) which is movable outwardly to facilitate release of the bale when the carrier (15) moves to the inoperative position.

14. Apparatus according to any one of the preceding claims, in which the frame (11) is a wheel-supported frame, and the apparatus is arranged to be towed by, and also to receive input power from a propelling vehicle.

15. Apparatus according to claim 14, in which the input drive line (20) is arranged to receive mechanical power from the propelling vehicle.

16. Apparatus according to any one of claims 1 to 15, in which the first and second couplings (32, 31) are mechanical free-wheel couplings.

17. Apparatus according to any one of claims 1 to 15, in which the first and second couplings are hydraulic arrangements having an operative mode when the apparatus is in its bale-wrapping mode, and an inoperative mode when the apparatus is in its bale-forming mode.

## Patentansprüche

1. Kombiniertes Ballenpress- und Ballenwickelgerät (10), welches umfasst:
einen Rahmen (11);
eine obere Gruppe von Walzen (12) und eine untere Gruppe von Walzen (13), die auf dem Rahmen (11) angebracht sind und eine Ballenformkammer (14) bilden, in welcher ein Ballen (18) ausgebildet werden kann;
ein Walzenträger (15), der einstellbar auf dem Rahmen (11) zur Bewegung zwischen einer Ballenformposition und einer betriebslosen Position angebracht ist, wobei die obere Gruppe Walzen (12) auf dem Träger (15) zur Bewegung mit diesem angebracht ist;
einen Halter (16) für eine Folienspenderrolle (17), welche auf dem Rahmen (11) angebracht ist, um so in der Lage zu sein, einen geschlossenen Bewegungspfad um den Ballen (18) auszuführen, so dass, wenn der Ballen (18) in der Kammer (14) ausgebildet worden ist und der Träger (15) in die betriebslose Position bewegt worden ist, eine Spenderrolle (17), wenn sie auf dem Halter (16) angebracht ist, eine dehnbare Folienverpackung auf dem Ballen (18) gleichzeitig mit der Rotation des Ballen (18) durch die untere Gruppe Walzen (13) aufbringen kann;
eine Antriebstransmission (20); und
einen mechanischen Antriebsstrang (25, 26), welcher mit der Antriebstransmission (20) gekuppelt ist und so angeordnet ist, um eine Rotationsantriebsleistung bereit zu stellen, um die obere und die untere Gruppe Walzen (12, 13) zu betreiben, wenn das Gerät im Ballenformmodus betrieben wird;
**gekennzeichnet durch**:
einen ersten und einen zweiten Motor (27, 28), welche betrieben werden, um Rotationsantriebsleistung jeweils an die untere Gruppe Walzen (13) und an den Halter (16) für die Folienrolle (17) anzulegen, wenn das Gerät in einem Ballenwickelmodus betrieben wird und auch wenn die Leistung von der Antriebstransmission (20) abgeschaltet ist;
eine erste Kupplung (32), welche im mechanischen Antriebsstrang (26) angeordnet ist und betrieben wird, um mechanische Rotationsleistung auf die untere Gruppe Walzen (13) zu übertragen, wenn das Gerät im Ballenformmodus betrieben wird, aber nicht betrieben wird, wenn das Gerät im Ballenwickelmodus betrieben wird; und
eine zweite Kupplung (31), welche betrieben wird, um Rotationsleistung vom ersten Motor (27) und über einen Teil des mechanischen Antriebsstrangs (26) auf die untere Gruppe Walzen (13) zu übertragen, wenn das Gerät im Ballenwickelmodus betrieben wird, aber nicht betrieben wird, wenn das Gerät im Ballenformmodus betrieben wird.

2. Gerät nach Anspruch 1, **dadurch gekennzeichnet, dass** die erste Kupplung (32) betrieben wird, um mechanische Rotationsleistung nur auf die untere Gruppe Walzen (13) zu übertragen, aber nicht betrieben wird, wenn das Gerät im Ballenwickelmodus betrieben wird.

3. Gerät nach Anspruch 1, **dadurch gekennzeichnet, dass** wenigstens eine der Kupplungen (32, 31) eine Freilaufkupplung ist.

4. Gerät nach Anspruch 1, **dadurch gekennzeichnet, dass** die erste Kupplung wenigstens dann betrieben wird, wenn das Gerät im Ballenformmodus betrieben wird, aber nicht betrieben wird, wenn das Gerät im Ballenwickelmodus betrieben wird; und **dadurch**, dass der Antrieb zu der oberen Gruppe Walzen (12) wenigstens während der Anfangsstufe der Bewegung des Trägers (15) von der Ballenformposition und in Richtung der betriebslosen Position weitergeht, um die Trennung des geformten Ballens von der oberen Gruppe Walzen (12) vor dem Beginn des Ballenwickelmodus auszuführen.

5. Gerät nach Anspruch 4, in welchem der ununterbrochene Antrieb für die obere Gruppe Walzen (12) von der Antriebsleistungsversorgung zu der Antriebstransmission (20) abgeleitet wird.

6. Gerät nach irgendeinem der Ansprüche 1 bis 5, in welchem der erste und der zweite Motor (27, 28) Hydraulikmotoren sind.

7. Gerät nach Anspruch 6, in welchem der erste und der zweite Motor (27, 28) synchronisiert betrieben werden können.

8. Gerät nach irgendeinem der Ansprüche 1 bis 7, in welchem der Halter (16) einen runden oder teilweise runden Halter umfasst, welcher über den zweiten Motor (28) angetrieben wird, um um seine Achse zu rotieren.

9. Gerät nach Anspruch 8, in welchem der zweite Motor (28) ein Ritzel aufweist, welches mit einem mit Zähnen versehenen Ring in Eingriff steht, der auf dem Halter (16) bereit gestellt ist.

10. Gerät nach irgendeinem der Ansprüche 1 bis 9, in welchem der Halter für die Folienspenderrolle (17) ein Anordnung vom Typ umlaufender Satellit aufweist.

11. Gerät nach irgendeinem der vorangehenden Ansprüche, in welchem mehr als ein Motor (28) vorgesehen ist, um den Halter (16) anzutreiben, um um seine Achse zu rotieren, während des Betriebs des Geräts im Ballenwickelmodus.

12. Gerät nach irgendeinem der vorangehenden Ansprüche, in welchem die untere Gruppe Walzen (13) eine Walzeneinheit umfasst, die nach unten versetzbar ist, wenn das Wickeln des Ballens (18) abgeschlossen worden ist, um den Ausstoß des eingewickelten Ballens zu erlauben.

13. Gerät nach irgendeinem der vorangehenden Ansprüche, in welchem die obere Gruppe Walzen (12) eine Walze (12a) umfasst, die nach außen bewegbar ist, um die Freigabe des Ballens zu bewirken, wenn der Träger (15) sich in die betriebslose Position bewegt.

14. Gerät nach irgendeinem der vorangehenden Ansprüche, in welchem der Rahmen (11) ein von Rädern getragener Rahmen ist und das Gerät angeordnet ist, um durch ein Zugfahrzeug gezogen zu werden und auch um die Antriebsleistung von diesem zu empfangen.

15. Gerät nach Anspruch 14, in welchem die Antriebstransmission (20) angeordnet ist, um mechanische Leistung vom Zugfahrzeug zu empfangen.

16. Gerät nach irgendeinem der Ansprüche 1 bis 15, in welchem die erste und die zweite Kupplung (32, 31) mechanische Freilaufkupplungen sind.

17. Gerät nach irgendeinem der Ansprüche 1 bis 15, in welchem die erste und die zweite Kupplung hydraulische Anordnungen sind, die einen Betriebsmodus aufweisen, wenn sich das Gerät im Ballenwickelmodus befindet, und einen betriebslosen Modus aufweisen, wenn sich das Gerät in seinem Ballenformmodus befindet.

## Revendications

1. Dispositif (10) constitué d'une presse à balle et d'un dispositif d'emballage de balle combinés, qui comporte :
un châssis (11),
un groupe de rouleaux supérieur (12) et un groupe de rouleaux inférieur (13) montés sur le châssis (11), et définissant une chambre de formation de balle (14) dans laquelle une balle (18) peut être formée,
un porte-rouleaux (15) monté de manière ajustable sur le châssis (11) pour un déplacement entre une position de formation de balle et une position inopérante, ledit groupe de rouleaux supérieur (12) étant monté sur le porte-rouleaux (15) pour un déplacement avec celui-ci,
un support (16) destiné à une bobine de distribution de film (17) qui est monté sur le châssis (11) de manière à pouvoir suivre un trajet de déplacement fermé autour de la balle (18) de sorte que, lorsque la balle (18) a été formée dans la chambre (14) et le porte-rouleaux (15) a été déplacé vers la position inopérante, une bobine de distribution (17), lorsqu'elle est montée sur le support (16), peut appliquer un film extensible emballant la balle (18) en même temps que la rotation de la balle (18) par l'intermédiaire du groupe de rouleaux inférieur (13),
une ligne d'entraînement d'entrée (20), et
une transmission mécanique (25, 26) couplée à la ligne d'entraînement d'entrée (20), et prévue pour fournir une puissance d'entrée rotative pour faire fonctionner les groupes de rouleaux supérieur et inférieur (12, 13) lorsque le dispositif fonctionne en mode de formation de balle,
**caractérisé par**
des premier et second moteurs (27, 28) opérationnels pour appliquer une puissance d'entrée de rotation respectivement au groupe de rouleaux inférieur (13) et au support (16) de la bobine de film (17) lorsque le dispositif fonctionne en mode d'emballage de balle, et également lorsque de la puissance provenant de la ligne d'entraînement d'entrée (20) est interrompue,
un premier couplage (32) agencé dans la transmission mécanique (26) et opérationnel pour transmettre une puissance mécanique de rotation au groupe de rouleaux inférieur (13), lorsque le dispositif fonctionne dans le mode de formation de balle, mais étant inopérant lorsque le dispositif fonctionne dans le mode d'emballage de balle, et
un second couplage (31) opérationnel pour transmettre une puissance de rotation à partir du premier moteur (27) et via une partie de la transmission mécanique (26) vers le groupe de rouleaux inférieur (13) lorsque le dispositif fonctionne dans le mode d'emballage de balle, mais inopérant lorsque le dispositif fonctionne dans le mode de formation de balle.

2. Dispositif selon la revendication 1, **caractérisé en ce que** le premier couplage (32) est opérationnel pour transmettre une puissance mécanique de rotation uniquement au groupe de rouleaux inférieur (13), mais est inopérant lorsque le dispositif fonctionne dans le mode d'emballage de balle.

3. Dispositif selon la revendication 1, **caractérisé en ce qu'**au moins un des couplages (32, 31) est un couplage à roue libre.

4. Dispositif selon la revendication 1, **caractérisé en ce que** le premier couplage est opérationnel au moins lorsque le dispositif fonctionne en mode de formation de balle, mais est inopérant lorsque le dispositif fonctionne dans le mode d'emballage de balle, et **en ce qu'**un entraînement du groupe de rouleaux supérieur (12) continue au moins pendant le stade de déplacement initial du porte-rouleaux (15) à partir de la position de formation de balle et vers la position inopérante, pour faciliter une séparation de la balle formée à partir du groupe de rouleaux supérieur (12) avant le commencement du mode d'emballage de balle.

5. Dispositif selon la revendication 4, dans lequel l'entraînement continu du groupe de rouleaux supérieur (12) est dérivé à partir d'une alimentation de puissance d'entrée vers la ligne d'entraînement d'entrée (20).

6. Dispositif selon l'une quelconque des revendication 1 à 5, dans lequel les premier et second moteurs (27, 28) sont des moteurs hydrauliques.

7. Dispositif selon la revendication 6, dans lequel les premier et second moteurs (27, 28) peuvent fonctionner de manière synchronisée.

8. Dispositif selon l'une quelconque des revendications 1 à 7, dans lequel le support (16) comporte un support circulaire ou partiellement circulaire qui est entraîné pour tourner autour de son axe via le second moteur (28).

9. Dispositif selon la revendication 8, dans lequel le second moteur (28) a un pignon venant en prise avec un anneau denté agencé sur le support (16).

10. Dispositif selon l'une quelconque des revendications 1 à 9, dans lequel le support destiné à la bobine de distribution de film (17) est un agencement de type satellite en orbite.

11. Dispositif selon l'une quelconque des revendications précédentes, dans lequel plus d'un moteur (28) est fourni pour entraîner le support (16) à tourner autour de son axe, pendant le fonctionnement du dispositif dans le mode d'emballage de balle.

12. Dispositif selon l'une quelconque des revendications précédentes, dans lequel le groupe de rouleaux inférieur (13) comporte une unité de rouleau qui peut être déplacée vers le bas, lorsqu'un emballage de la balle (18) a été achevé, pour permettre une évacuation de la balle emballée.

13. Dispositif selon l'une quelconque des revendications précédentes, dans lequel le groupe de rouleaux supérieur (12) comporte un rouleau (12a) qui est mobile vers l'extérieur pour faciliter une libération de la balle lorsque le porte-rouleaux (15) se déplace vers la position inopérante.

14. Dispositif selon l'une quelconque des revendications précédentes, dans lequel le châssis (11) est un châssis supporté par des roues, et le dispositif est prévu pour être tracté par un dispositif de propulsion, et également pour recevoir de la puissance d'entrée à partir de celui-ci.

15. Dispositif selon la revendication 14, dans lequel la ligne d'entrainement d'entrée (20) est agencée pour recevoir de la puissance mécanique à partir du véhicule de propulsion.

16. Dispositif selon l'une quelconque des revendications 1 à 15, dans lequel les premier et second couplages (32, 31) sont des couplages mécaniques à roue libre.

17. Dispositif selon l'une quelconque des revendications 1 à 15, dans lequel les premier et second couplages sont des agencements hydrauliques ayant un mode opérationnel lorsque le dispositif est dans son mode d'emballage de balle, et un mode inopérant lorsque le dispositif est dans son mode de formation de balle.
